(19) Europäisches Patentamt
European Patent Office
Office européen des brevets

(11) EP 0 825 063 B1

(12) **EUROPEAN PATENT SPECIFICATION**

(45) Date of publication and mention of the grant of the patent:
**20.02.2002 Bulletin 2002/08**

(51) Int Cl.$^7$: **B60Q 1/115**

(21) Application number: **97114601.4**

(22) Date of filing: **22.08.1997**

(54) **Apparatus for automatically controlling a direction of an optical axis of a vehicle headlight**

Einrichtung zur automatischen Steuerung der Richtung der optischen Achse eines Scheinwerfers

Dispositif de commande automatique de la direction de l'axe optique d'un phare de véhicule

(84) Designated Contracting States:
**DE FR IT**

(30) Priority: **22.08.1996 JP 22088196**

(43) Date of publication of application:
**25.02.1998 Bulletin 1998/09**

(73) Proprietor: **DENSO CORPORATION**
**Kariya-City Aichi-Pref. 448 (JP)**

(72) Inventor: **Okuchi, Hiroaki**
**Kariya-shi, Aichi-pref. 448 (JP)**

(74) Representative: **Tiedtke, Harro, Dipl.-Ing. et al**
**Patentanwaltsbüro Tiedtke-Bühling-Kinne & Partner Bavariaring 4**
**80336 München (DE)**

(56) References cited:
**EP-A- 0 355 539**
**EP-A- 0 600 798**
**DE-A- 3 129 891**
**DE-A- 4 019 690**
**FR-A- 2 505 750**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 825 063 B1

## Description

The present invention relates to an apparatus for automatically controlling a direction of an optical axis of a vehicle headlight disposed in a vehicle.

In the past, it has been necessary to control the direction of an optical axis of a vehicle headlight because illumination of the headlight dazzles a driver driving a vehicle facing the headlight for a moment if the direction of the optical axis turns upward due to inclination of the vehicle, or faraway visibility may be poor if the direction of the optical axis turns downward due to declination of the vehicle.

Prior art techniques that relate to this problem are disclosed in Japanese Laid-Open Patent Publication Nos. Hei 5-229383, Hei 5-250901 and Hei 6-32169. These prior art documents disclose techniques which automatically control a direction of an optical axis of the vehicle headlight.

In controlling a direction of an optical axis of a vehicle headlight, a vehicle pitch angle, which is calculated by using a height sensor or the like when the vehicle is moving on a rough road, includes high frequency components of vibrations. Even if accurate calculation is obtained, a driving system cannot follow up on the pitch angle information in a timely fashion, resulting in illumination by the headlight which dazzles a driver driving a vehicle facing the headlight and which lowers a driver's faraway visibility.

FIGS. 7A - 7E are graphs of conventional control of a direction of an optical axis of a vehicle headlight when the vehicle is moving on a rough road. Here, $\theta p$ denotes a vehicle pitch angle calculated by using a height sensor or the like. $\theta a$ is an actuator driving angle (a control angle for the direction of the optical axis). $\theta$ is a controlled optical axis angle (control angle of an optical axis of the vehicle headlight) ($= \theta p + \theta a$), V is wheel speed [km/h], and dV/dt is positive acceleration [$m/s^2$] obtained by differentiating the wheel speed V. Here, to satisfy a requirement of high speed detecting accuracy, the wheel speed V is employed as a speed rate. That means that the positive acceleration dV/dt is calculated based on vehicle rotation fluctuation when the vehicle is moving on a rough road, even if the wheel speed V indicates substantially regular speed. When the positive acceleration dV/dt is over a predetermined threshold value $\pm 2$ [$m/s^2$], the actuator driving angle $\theta a$ fluctuates often and the controlled the optical axis angle also fluctuates, resulting in an inappropriate control.

Japanese Utility Model No. Sho 61-158530 discloses a technique of control of the optical axis only when the vehicle inclination is in a give state for a predetermined period. For this reason, the control of the optical axis is stopped when the vehicle is traveling on a rough road so that inappropriate control is performed.

However, according to the aforementioned publication, when, for example, a brake is applied before the vehicle is traveling on a rough road, the optical axis is stopped at a position controlled to an upward direction of the optical axis, thereby dazzling a drive driving a vehicle facing the headlight.

DE 31 29 891 A1 discloses an apparatus for automatically controlling a direction of an optical axis of a vehicle headlight. This apparatus comprises a sensor for detecting a relative position of the front axis and a sensor for detecting a relative position of the rear axis. Both of this signals are supplied to a mixer, which produces a signal indicating a vibration of the vehicle. This signal is supplied to a filter which outputs a signal supplied to a head light control means. The filter comprises filter elements by means of which a variable characteristic can be set in dependence on the amplitude of the input signal. In particular, the filter comprises diodes and resistors by means of which two fixed threshold values are set. In detail, the signal is compared with the thresholds, and values which are between the thresholds are not considered.

In view of the above-described problems, the object underlying the present invention resides in providing an apparatus for automatically controlling a direction of an optical axis of a vehicle headlight by which a more accurate control of the direction of the vehicle headlight is possible.

This object is solved by an apparatus for automatically controlling a direction of a vehicle headlight according to claim 1.

Further advantageous developments are set out in the dependent claims 2 to 5.

Additional objects and advantages of the present invention will be more readily apparent from the following detailed description of preferred embodiments thereof when taken together with the accompanying drawings in which:

> FIG. 1 shows a system for automatically controlling a direction of an optical axis of a vehicle headlight according to a first preferred embodiment of the present invention;
> FIG. 2 is a cross-sectional view showing a central portion of the vehicle headlight shown in FIG. 1.
> FIG. 3 is a flowchart of processing in an ECU used in the first embodiment;
> FIG. 4 is a table for determining a mode of a vehicle according to the first embodiment;
> FIG. 5 shows a system for automatically controlling the direction of the optical axis of a vehicle headlight according to a second preferred embodiment of the present invention;
> FIG. 6 is a flowchart of processing in an ECU used in the second embodiment; and
> FIGS. 7A - 7E are graphs of a state of the vehicle moving on a rough road according to a conventional apparatus for automatically controlling a direction of an optical axis of a vehicle headlight.

FIG. 1 shows a system for automatically controlling a direction of an optical axis of a vehicle headlight according to a first preferred embodiment of the present invention.

In FIG. 1, a front-side height sensor 11F and a rear-side height sensor 11R are disposed at a drive side or a passenger side of a front and rear axle of a vehicle, respectively. These height sensors 11F and 11R output a front height signal HF (height displacement at a side of the vehicle front wheels) and a rear height signal HR (height displacement at a side of the vehicle rear wheels) as relative height displacement between the front and rear axles and the body (displacement of height), and a wheel speed sensor 12 and other sensors (not shown) are disposed in the vehicle and output various kinds of sensor signals as known in the art, for instance, a wheel speed signal V, and these sensor signals outputted from the sensors are inputted to an ECU (Electronic Control Unit) 20 disposed in the vehicle. The ECU 20 is shown out of the vehicle in FIG. 1 for ease of explanation.

The ECU 20 includes a CPU 21 as a central processing unit, ROM 22 storing a processing program, RAM 23 for storing data therein, B/U (Back Up) RAM 24, I/O interface 25, and bus line 26 connecting all of them together.

Output signals from ECU 20 are inputted to actuators 35L and 35R disposed next to each of vehicle headlights 30L and 30R, and a direction of an optical axis of each of the vehicle headlights 30L and 30R is controlled as described below. Sensor signals outputted from sensors, for instance, the wheel speed sensor 12, are used to determine the state of the vehicle, for instance, running state, stopped state, accelerating state, and decelerating state.

FIG. 2 is a cross-sectional view showing a central structure of the vehicle headlight 30L (30R) shown in FIG. 1.

As shown in FIG. 2, the headlight 30L (30R) essentially consists of a lamp 31, a reflector 32 which fixes the lamp 31 in place, a rod-shaped supporting part 33 which supports an upper part of the reflector 32 so that the reflector 32 can swing in the direction shown by the arc-shaped arrow, a rod-shaped movable part 34 which supports the lower part of the reflector 32 and actuator 35L (35R), for instance, a step motor or a DC motor, which shifts the movable part 34 in the direction shown by the straight arrow. Accordingly, as the movable part 34 is shifted in the straight-line direction by the actuator 35L (35R), the reflector 32 is shifted in the circular arc direction so that the direction of the optical axis of the headlight 30L (30R) is adjusted. The direction of the optical axis of the headlight 30L (30R) is previously set up to provide optimum illumination for the vehicle's driver.

Among the vehicle sensor signals inputted to the ECU 20, a pitch angle θp as an inclination with respect to a reference plane previously set based on the front height signal HF and the rear height signal HR from the height sensors 11F and 11R is calculated by the following Equation (1), where LW is a distance between the front axle and the rear axle:

$$\theta_p = \tan^{-1}\frac{HF\text{-}HR}{Lw} \qquad (1)$$

While the vehicle is traveling on a rough road, in spite of a regular speed, the pitch angle θp fluctuates a great deal. Pitch angle displacement Δθpi per sampling interval Ts of the pitch angle θp is calculated by the following Equation (2):

$$\Delta\theta_{pi} = \frac{\theta_{pi}\text{-}\theta_{pi\text{-}1}}{Ts} \qquad (2)$$

Based on the pitch angle displacement Δθpi, a dispersion value θvar as a measure of a scattering in the pitch angle change rate is calculated by the following Equation (3), where n is the number of data points used for calculation which is based on the sampling interval Ts, the data points being taken over the last few seconds of pitch angle measurements :

$$\theta_{var} = \frac{n\Sigma\Delta\theta_{pi}^{\ 2} - (\Sigma\Delta\theta_{pi})^2}{n^2} \qquad (3)$$

Here, the pitch angle change rate is a measure of the scattering, but any other physical quantities which indicate unevenness of road such as the pitch angle, height signal by the height sensor, vertical acceleration or the like, can be the measure of the scattering. Standard deviation may be used as the measure of the scattering.

FIG. 3 is a flowchart of processing in the CPU 21 disposed in the ECU 20 used in the apparatus for automatically controlling the direction of the optical axis of the vehicle headlight according to first embodiment. This processing is executed about every 50 ms. FIG. 4 is a table of filters A, B and C used in FIG. 3 corresponding to the states of the vehicle (running state, stopped state, accelerating state and decelerating state), where the horizontal axis is a wheel speed V [km/h], and the vertical axis is positive acceleration dV/dt [$m/s^2$] obtained by differentiating the wheel speed V. Some of the filters may be hardware-implemented filters, e.g., for smoothing signals by an RC circuit for the height sensor signal, and some may be software-implemented filters, e.g., for smoothing signals using moving average and standard deviation calculations by the ECU for the height sensor signal and a pitch angle. In the present system, a moving average is used for the pitch angle which is advantageous in cost, since the ECU is already installed and a dedicated hardware device therefore need not be used.

Here, according to the table in FIG. 4, when wheel speed V is less than several km/h (e.g., 2 [km/h]), Filter A corresponding to a stop state is adopted. As sharp fluctuations in pitch angle due to loading and unloading or the like are estimated at a time of stop, no filter (or a weak filter) should be covered for quick response of the actuator to the pitch angle fluctuation. When the wheel speed V is over several km/h (e.g., 2 [km/h]) and positive acceleration dV/dt calculated by differentiating the wheel speed V is over a predetermined threshold value (e.g., ± 2 [m/s$^2$]), Filter B corresponding to an accelerating state or a decelerating state is adopted. As large fluctuations of a pitch angle are also estimated at this point, no filter (or a weak filter) should be adopted for quick response of the actuator to the pitch angle fluctuation. When the wheel speed V is over several km/h (e.g., 2 [km/h]) and positive acceleration dV/dt calculated by differentiating the wheel speed V is less than the predetermined threshold value (e.g., 2 [m/s$^2$]), a Filter C corresponding to a running state is adopted. As no large fluctuation of the pitch angle is estimated, a filter strong enough to remove the pitch angle fluctuation due to high frequency components of vibrations at the time of traveling and bumps on a road is adopted so that the actuator does not respond.

In FIG. 3, after an initial set-up is executed in Step S101, Step S102 reads signals such as the wheel speed V, the front height signal HF, the rear height signal HR and the like. Step S103 determines whether or not the dispersion value θvar based on Equation (1) is less than the predetermined threshold value VAR0. If Step S103 determines the dispersion value θvar is less than the threshold value VAR0, the vehicle should be in the stopped state or accelerating or decelerating state, so Step S104 determines whether or not the wheel speed V being read in Step S102 is less than a predetermined threshold value V0. The threshold value V0 is assumed to be 2 [km/h], for example, according to the table in FIG. 1. If Step S104 determines the wheel speed V is less than the predetermined threshold value V0, the vehicle should be in the stopped state, so Step S105 selects the weak Filter A (shown in FIG. 4) for the pitch angle θp calculated based on Equation (1). In this way, a pitch angle θpf obtained by filtering the pitch angle θp by means of the weak Filter A comes close to the transition state of the actual pitch angle θp.

On the other hand, if Step S104 determines the wheel speed V is not less than the predetermined threshold value V0 and the wheel speed V is over 2 [km/h], Step S106 determines whether the absolute value of the positive acceleration dV/dt obtained by differentiating the wheel speed V is over the predetermined threshold value α. The threshold value is assumed to be 2 [m/s$^2$], for example, according to the table in FIG. 4. If Step S106 determines the absolute value of the positive acceleration dV/dt is over the predetermined threshold value α, the vehicle should be in the acceleration and deceleration state, so Step S107 selects the weak Filter B (shown in FIG. 4) for the pitch angle θp calculated based on Equation (1). In this way, a pitch angle θpf obtained by filtering the pitch angle θp by means of the weak Filter B, similar to the stopped state, comes close to the transition state of the actual pitch angle θp.

If Step S103 determines the dispersion value θvar is the predetermined threshold value VAR0 or more, or, if Step S106 determines the absolute value of the positive acceleration dV/dt is the predetermined threshold value α or less, the vehicle should be in the running state, so Step S108 selects the strong Filter C (shown in FIG. 4) in relation to the pitch angle θp calculated based on Equation (1). A pitch angle θpf obtained by filtering the pitch angle θp by means of the Filter C has no fluctuation because the high frequency components of vibrations are removed from the transition state of the actual pitch angle θp.

Accordingly, when an accelerating or decelerating operation is performed when the vehicle is moving normally, regular wheel speed and positive acceleration are determined and a weak filter is selected so that the actuator can quickly respond. In addition, the filter is not changed even if the accelerating and decelerating operation is performed after a rough road is determined. Because scattering is evaluated by the dispersion value, it is not necessary to remove offset values of the pitch angle or the like due to loads, thereby requiring no short sampling processing such as frequency sampling and reducing the operational load. Furthermore, the cost of the system can be reduced because this embodiment includes fewer sensor inputs.

In this way, in relation to each pitch angle θpf filtered in the vehicle stopped state in Step S105, in the vehicle accelerating and decelerating state in Step S107 and in the vehicle running state in Step S108, an actuator driving angle (a control angle for the direction of the optical axis) θa such that illumination does not dazzle a driver driving another vehicle facing the vehicle is nearly the same as the pitch angle θpf, and the sign of the angle is opposite to that of θpf. Then, Step S109 operates the actuator 35L (35R) based on the actuator driving angle θa. Here, control speed setup and the like in relation to the actuator 35L (35R) are omitted. Accordingly, the direction of the optical axis of the headlight 30L (30R) is controlled based on the vehicle state (running state, stopped state, accelerating state and decelerating state).

In this way, according to the apparatus for automatically controlling a direction of an optical axis of a vehicle headlight described in this embodiment and as recited in the appended claims, the apparatus comprises inclination calculating means implemented with the CPU 21 in the ECU 20, for calculating a pitch angle θp as an inclination against a reference plane extending in a direction of the optical axes of the vehicle headlights 30L and 30R; direction of optical axis control means implemented with the CPU 21 in the ECU 20, for controlling the direction of the optical axes of the vehicle headlights 30L and 30R based on the inclination calculated by the inclination calculating means; and road state determining means implemented with the CPU 21 in the ECU 20, for determining a state of the road. When the road state determining means determines the vehicle is traveling on a rough road, the system delays the response control performance the headlights 30L and 30R by means of the direction of optical axis control means.

Therefore, the pitch angle θp is calculated by the CPU 21 in the ECU 20 as the inclination calculating means based on the height displacement from the two height sensors 11F and 11R, and the direction of the optical axes of the vehicle headlights 30L and 30R is controlled by the CPU 21 in the ECU 20 as the direction of optical axis control means based on the pitch angle θp. When a rough road is determined by the CPU 21 in the ECU 20 as the road state determining means, the responding performance of the control of the direction of the optical axes of the vehicle headlights 30L and 30R is delayed. That is, consideration of road condition can prevent a bad influence caused by the control of the direction of the optical axes of the vehicle headlights 30L and 30R.

In addition, according to the system for automatically controlling the direction of the optical axis of the vehicle headlight described in this embodiment, the direction of optical axis control means implemented with the CPU 21 in the ECU 20 changes a filter to switch the responding performance of controlling the direction of the optical axes of the vehicle headlights 30L and 30R when the road state determining means determines the vehicle is traveling on a rough road.

Therefore, the filter change i.e., changes in a degree of smoothing of the pitch angle θp can achieve the switching of the responding performance of controlling the direction of the optical axes of the vehicle headlights 30L and 30R when CPU 21 in the ECU 20 as the road state determining means determines the vehicle is traveling on a rough road. In this way, switching the responding performance of the controlling the direction of the optical axes of the vehicle headlights 30L and 30R using the strong filter can prevent a bad influence caused by controlling the direction of the optical axes of the vehicle headlights 30L and 30R.

According to the system for automatically controlling the direction of the optical axis of the vehicle headlight described in this embodiment, the road state determining means achieved at the CPU 21 in the ECU 20 determines the vehicle is traveling on a rough road based on the dispersion value θvar of the pitch angle θp as a scattering of the physical quantity which indicates the vehicle vibrating state.

Therefore, the CPU 21 in the ECU 20 as the road state determining means can determine that a road is not a rough road when the dispersion value θvar of the pitch angle θp as the physical quantity scattering indicating the vehicle vibrating state is less than a predetermined value. For this reason, the actual necessity of controlling the optical axes of the vehicle headlights 30L and 30R can be exactly obtained.

According to the system for automatically controlling the direction of the optical axis of the vehicle headlight described in the present embodiment, a physical quantity indicating a vibrating state of at least any one of a vehicle body and suspension of the apparatus is set to be front and rear height signal HF and HR from the height sensor 11F and 11R and pitch angle θp in front and behind of the vehicle body.

That is, the applied pitch angle θp is calculated based on the front and rear height signal HF and HR from the height sensors 11F and 11R as the physical quantity indicating the vibrating state of the vehicle body or the suspension. Therefore, the angle θp may be obtained using a sensor signal corresponding to a smaller physical quantity representative of a vibration state at least any one of the vehicle body and the suspension.

According to the present embodiment, at the time of determining a rough road, a strong filter is put on the detected pitch angle in order to restrain the unnecessary fluctuation of the optical axes of the vehicle headlights. To enforce the present invention, the means for restraining the fluctuation need not be so limited, and it is possible to return to the initial position of the direction of the optical axis, to hold the present position or the like.

According to such an apparatus for automatically controlling the direction of the optical axis of the vehicle headlight, the direction of optical axis control means implemented by the CPU 21 in the ECU 20 returns the direction of the optical axes of the vehicle headlights 30L and 30R to the predetermined position to stop the control when the road state determining means determines a rough road.

Accordingly, when the CPU 21 in the ECU 20 as the road state determining means determines a rough road, the direction of the optical axes of the vehicle headlights 30L and 30R returns to the initial direction of the optical axis by means of the CPU 21 in the ECU 20 as the direction of optical axis control means so that the control stops. Therefore, the control stops after the direction of the optical axes of the vehicle headlights 30L and 30R, thereby preventing influence of the direction of the optical axis before the control stop.

FIG. 5 is a schematic view showing an apparatus for automatically controlling the direction of the optical axis of a vehicle headlight according to a second preferred embodiment of the present invention. In this embodiment, the same parts as the apparatus described in the first embodiment are denoted by the same signs as the apparatus described in the first embodiment and repeated description is omitted for brevity.

In FIG. 5, a front height sensor 11F and a rear height sensor 11R are disposed at a driver side or a passenger side of a front and rear axle of a vehicle, respectively. These height sensors 11F and 11R output a front height signal HF and a rear height signal HR as relative height displacement between the front and rear axles and the body, and a wheel speed sensor 12, and other sensors (not shown) which are known in the art and disposed in the vehicle output some kind of sensor signals, for instance, a wheel signal V, and these sensor signals, for instance, a wheel speed signal V, and these sensor signals outputted from the sensors are inputted to an ECU 20 disposed in the vehicle. The ECU 20 is shown out of the vehicle for ease of explanation.

The ECU 20 includes a CPU 21 as a central processing unit, ROM 22 storing a processing program, RAM 23 for recording several data, B/U (Back Up) RAM 24, I/O interface 25, and bus line 26 connecting all of them together.

Output signals from ECU 20 are inputted to actuators 35L and 35R disposed next to each of the vehicle headlights 30L and 30R, and a direction of an optical axis of each of the vehicle headlights 30L and 30R is controlled as described later. Sensor signals outputted from sensors, for instance, the wheel speed sensor 12, throttle opening degree sensor 13 or the like, are used to determine the state of the vehicle, for instance, running state, stopped state, accelerating state, and decelerating state.

FIG. 6 is a flowchart of processing in the CPU 21 disposed in the ECU 20 used in the apparatus for automatically controlling the direction of the optical axis of the vehicle headlight according to the present invention based on the second embodiment. The routine of this processing is executed about every 50 ms.

After an initial setup is executed in Step S201, Step S202 read sensor signals such as the wheel speed V, the front height signal HF, the rear height signal HR and the like. Step S203 determines whether or not the throttle opening degree change rate dTA/dt is over the predetermined threshold value S0. If Step S203 determines the throttle opening degree change rate dTA/dt is over the threshold value S0, Step S204 determines whether or not the wheel speed V being read in Step S202 is less than the predetermined threshold value V0. The threshold value V0 is assumed to be 2 [km/h], for example, according to the table in FIG. 4. If Step S204 determines the wheel speed V is less than the threshold value V0, the vehicle should be in the stopped state, so Step S205 puts a weak Filter A (shown in FIG. 4) in regard to the pitch angle θp calculated based on Equation (1). In this way, a pitch angle θpf obtained by filtering the pitch angle θp by means of the weak Filter A comes close to the transition state of the actual pitch angle θp to some extent.

On the other hand, if Step S204 determines the wheel speed V is not less than the predetermined threshold value V0, that is, the wheel speed V is over 2 [km/h], Step S206 determines whether or not the absolute value of the positive acceleration dV/dt obtained by differentiating the wheel speed V is over the predetermined threshold value α. The threshold value α is assumed to be 2 [m/s$^2$], for example, according to the table in FIG. 4. If Step S206 determines the absolute value of the positive acceleration dV/dt is over the threshold value α, the vehicle should be in the acceleration and deceleration state, so Step S107 put the weak Filter B (shown in FIG. 4) in regard to the pitch angle θp calculated based on Equation (1). In this way, a pitch angle θpf obtained by filtering the pitch angle θp by means of the weak Filter B, as same as the one at the stopped state, come close to the transition state of the actual pitch angle θp.

If Step S203 determines the throttle opening degree change rate dTA/dt is not over the threshold value V0 or the brake signal is turned off, or if Step S206 determines not over the absolute value of the positive acceleration dV/dt, the vehicle should be in the running state, so Step S208 put the high-Q Filter C (shown in FIG. 4) in relation to the pitch angle θp calculated based on Equation (1). A pitch angle θpf obtained by filtering the pitch angle θp by means of the Filter C has no fluctuation because the high frequency components of vibrations are removed from the transition state of the actual pitch angle θp. According to the present embodiment, when the accelerating and decelerating operation is performed when the vehicle is moving on a rough road, a weak filter is adopted so that the actuator can quickly respond.

In this way, in relation to each pitch angle θpf filtered in the vehicle stopped state in Step 205, in the vehicle accelerating and decelerating state in Step S107 and in the vehicle running state in Step S108, an actuator driving angle (a control angle for the direction of the optical axis) θa such that illumination does not dazzle a driver driving another vehicle facing the vehicle is nearly the same as the pitch angle θpf, and the sign of angle is opposite to that of θpf. Then, Step S209 operates the actuator 35L (35R) based on the actuator driving angle θa. Here, control speed setup and the like in relation to the actuator 35L (35R) are omitted. Accordingly, the direction of the optical axis of the headlight 30L (30R) is controlled based on the vehicle state (running state, stopped state, accelerating state and decelerating state).

In this way, according to the apparatus for automatically controlling a direction of an optical axis of a vehicle headlight described in this embodiment, the apparatus includes inclination calculating means implemented by the CPU 21 in the ECU 20, for calculating a pitch angle θa as inclinations against a reference plane extending in a direction of the optical axes of the vehicle headlights 30L and 30R; direction of optical axis control means implemented by the CPU 21 in the ECU 20, for controlling the direction of the optical axes of the vehicle headlights 30L and 30R based on the inclination calculated by the inclination calculating means; and road state determining means implemented by the CPU 21 in the ECU 20, for determining a state of the road being traveled on. When the road state determining means determines a rough road, the apparatus delays the control response of the direction of optical axes of the headlights 30L and 30R by means of the direction of optical axis control means.

Therefore, the pitch angle θp is calculated by the CPU 21 in the ECU 20 as the inclination calculating means based on the height displacement from the two height sensor 11F and 11R, and the direction of the optical axes of the vehicle headlight 30L and 30R is controlled by the CPU 21 in the ECU 20 as the direction of optical axis control means based on the pitch angle θp. When a rough road is determined by the CPU 21 in the ECU 21 as the road state determining means, the response performance of controlling the direction of the optical axes of the vehicle headlights 30L and 30R is delayed. That is, consideration of road condition can prevent a bad influence caused by the control of the direction of the optical axes of the vehicle headlights 30L and 30R.

In addition, according to the apparatus for automatically controlling the direction of the optical axes of the vehicle headlights described in the present embodiment, the direction of optical axis control means, which is implemented by the CPU 21 in the ECU 20, changes a filter to switch the response performance of controlling the direction of the optical axes of the vehicle headlights 30L and 30R when the road state determining means determines the vehicle is traveling on a rough road.

Therefore, the filter change, i.e., changes in a degree of smoothing the pitch angle θp, can achieve the switching of the responding performance of controlling the direction of the optical axes of the vehicle headlights 30L and 30R when CPU 21 in the ECU 20 as the road state determining means determines a rough road. In this way, switching the responding performance of controlling the direction of the optical axes of the vehicle headlights 30L and 30R by using the strong filter can prevent a bad influence caused by controlling the direction of the optical axes of the vehicle headlights 30L and 30R.

According to the present embodiment, at the time of determining a rough road, a strong filter is adopted on the detected pitch angle to restrain the unnecessary fluctuation of the optical axes of the vehicle headlights; however, it is not necessary to limit the invention in this way to restrain the fluctuations, and it is possible to return the direction of the optical axis to its initial position, to hold the present position or the like.

According to such an apparatus for automatically controlling the direction of the optical axis of the vehicle headlight, the direction of optical axis control means, which is implemented by the CPU 21 in the ECU 20, returns the direction of the optical axes of the vehicle headlights 30L and 30R to the predetermined position to stop the control when the road state determining means determines the vehicle is traveling on a rough road.

Accordingly, when the CPU 21 in the ECU 20 as the road state determining means determines the vehicle is traveling on a rough road,the direction of the optical axes of the vehicle headlights 30L and 30R returns to the initial direction of the optical axis by means of the CPU 21 in the ECU 20 as the direction of optical axis control means so that the control stops. Therefore, the control stops after the direction of the optical axes of the vehicle headlights 30L and 30R, thereby preventing influence of the direction of the optical axis before the control stop.

Although the present invention has been fully described in connection with the preferred embodiments thereof with reference to the accompanying drawings, it is to be noted that various changes and modifications will become apparent to those skilled in the art. Such changes and modifications are to be understood as being included within the scope of the present invention as defined by the appended claims.

To prevent inaccurate control of a direction of an optical axis of a vehicle headlight 30R, 30L corresponding to a moving state of the vehicle; a pitch angle θp relative to a reference plane extending in a direction of optical axes of headlights 30L, 30R is calculated based on a signal outputted from height sensors 11F and 11R disposed at a front side and a rear side of the vehicle. Actuators 35L and 35R are operated based on the pitch angle θp so that the direction of the optical axes of the headlights 30L and 30R is controlled. When a rough road is determined, response performance of controlling the direction of the optical axes of the headlights 30L and 30R is delayed. That is, considering the road state can prevent a bad influence, such as illumination of the headlight 30R, 30L which dazzles a driver driving a vehicle facing the headlights 30R, 30L and a lowering of the driver's faraway visibility due to the control of the direction of the optical axes of the vehicle headlights 30R, 30L.

## Claims

1. An apparatus for automatically controlling a direction of a vehicle headlight (**30R, 30L**), the apparatus comprising:

   optical axis control means (**20, 21, 35R, 35L**) for controlling the direction of the optical axis of the vehicle headlight (**30R, 30L**); and
   road state determining means (**12, 20, 21**) for determining a state of a road on which the vehicle is traveling;

   wherein the optical axis control means (**20, 21, 35R, 35L**) is further for delaying response performance of control of the direction of the optical axis of the vehicle headlight (**30R, 30L**) when the road state determining means (**12, 20, 21**) determines the vehicle is traveling on a rough road,

said apparatus further comprising

inclination calculating means (**11F, 11R, 20, 21**) for calculating an inclination of the optical axis of the vehicle headlight (**30R, 30L**) relative to a reference plane extending in a direction of the vehicle headlight (**30R, 30L**); wherein

the optical axis control means (**20, 21, 35R, 35L**) is further adapted to control the direction of the optical axis of the vehicle headlight (**30R, 30L**) based on the inclination calculated by the inclination calculating means (**11F, 11R, 20, 21**), and

the road state determining means (**12, 20, 21**) is adapted to determine a state of a road on which the vehicle is traveling based on a vibration state detected on the basis of a dispersion value (θ**var**) calculated from at least one of a vehicle body and suspension, and to detect the vibration state based on at least one of an output from a height sensor, an output from a vertical acceleration sensor and a pitch angle (θ**p**) of the vehicle body in a front-back direction of the vehicle with respect to said reference plane on which body the vehicle headlight (**30R, 30L**) is mounted.

**2.** The apparatus according to claim 1, wherein

the optical axis control means (**20, 21, 35R, 35L**) is for changing a filter (**A, B, C**) filtering the sensor signal to switch the response performance of the control of the direction of the optical axis of the vehicle headlight (**30R, 30L**) when the road state determining means (**12, 20, 21**) determines the vehicle is traveling on a rough road.

**3.** The apparatus according to claim 1, further comprising:

driving state determining means (**20, 21, S103, S104, S106, S204, S206**) for determining a driving state of a vehicle on which the vehicle headlight (**30R, 30L**) is mounted;

wherein when the driving state determining means (**20, 21, S103, S104, S106, S204, S206**) determines the vehicle is traveling at a fixed speed or when the road state determining means (**12, 20, 21**) determines the vehicle is traveling on a rough road, the optical axis control means (**20, 210, 35R, 35L**) delays a response speed of control of the direction of the optical axis of the vehicle headlight (**30R, 30L**) so that it is slower than a response speed at a time when the driving state determining means (**20, 21, S103, S104, S106, S2040 S206**) determines the vehicle is in a stopped state or in an accelerating or decelerating state.

**4.** The apparatus according to claim 1, wherein

the optical axis control means (**20, 21, 35R, 35L**) is adapted to control the direction of the optical axis of the vehicle headlight (**30R, 30L**) to a predetermined position to stop controlling the same when the road sate determining means (**12, 20, 21**) determines the vehicle is traveling on a rough road.

**5.** The apparatus according to claim 4, wherein

the optical axis control means (**12, 20, 35R, 35L**) is for returning the direction of the optical axis of the vehicle headlight (**30R, 30L**) to a direction of the optical axis when the vehicle is stopped to stop control of the direction of the optical axis of the vehicle headlight (**30R, 30L**).

## Patentansprüche

**1.** Gerät zur automatischen Steuerung einer Richtung eines Fahrzeugscheinwerfers (**30R, 30L**), mit

einer optischen Achsensteuerungseinrichtung (**20, 21, 35R, 35L**) zur Steuerung der optischen Achse des Fahrzeugscheinwerfers (**30R, 30L**), und

einer Straßenzustandsbestimmungseinrichtung (**12, 20, 21**) zur Bestimmung eines Zustands einer Straße, auf der das Fahrzeug fährt,

wobei die optische Achsensteuerungseinrichtung (**20, 21, 35R, 35L**) weiterhin eingerichtet ist, das Ansprechverhalten der Steuerung der Richtung der optischen Achse des Fahrzeugschweinwerfers (**30R, 30L**) zu verzögern, wenn die Straßenzustandsbestimmungseinrichtung (**12, 20, 21**) bestimmt, dass das Fahrzeug auf einer unebenen Straße fährt,

wobei das Gerät weiterhin aufweist:

eine Neigungsberechnungseinrichtung (**11F, 11R, 20, 21**) zur Berechnung einer Neigung der optischen Achse des Fahrzeugscheinwerfers (**30R, 30L**) in bezug auf eine Referenzebene, die in Richtung des Fahrzeugscheinwerfers (**30R, 30L**) verläuft, wobei

die optische Achsensteuerungseinrichtung (**20, 21, 35R, 35L**) weiterhin eingerichtet ist, die Richtung der optischen Achse des Fahrzeugscheinwerfers (**30R, 30L**) auf der Grundlage der durch die Neigungsberechnungseinrichtung (**11F, 11R, 20, 21**) berechneten Neigung zu steuern,

die Straßenzustandsbestimmungseinrichtung (**12, 20, 21**) eingerichtet ist, einen Zustand einer Straße, auf der das Fahrzeug fährt, auf der Grundlage eines Vibrationszustands zu bestimmen, der auf der Grundlage eines zumindest anhand eines Fahrzeugaufbaus und einer Aufhängung berechneten Dispersionswerts (θ**var**) erfasst wird, und den Vibrationszustand auf der Grundlage von zumindest einem Ausgang aus einem Höhensensor, einem Ausgang aus einem vertikalen Beschleunigungssensor und einem Kippwinkel **(**θ**p)** des Fahrzeugaufbaus in Längsrichtung des Fahrzeugs in bezug auf die Referenzebene zu berechnen, an dessen Aufbau der Fahrzeugscheinwerfer (**30R, 30L**) angebracht ist.

**2.** Gerät nach Anspruch 1, wobei
die optische Achsensteuerungseinrichtung (**20, 21, 35R, 35L**) zur Änderung eines Filter (**A, B, C**) dient, der das Sensorsignal filtert, um das Ansprechverhalten der Steuerung der Richtung der optischen Achse des Fahrzeugscheinwerfers (**30R, 30L**) umzuschalten, wenn die Straßenzustandsbestimmungseinrichtung (**12, 20, 21**) bestimmt, dass das Fahrzeug auf einer unebenen Straße fährt.

**3.** Gerät nach Anspruch 1, weiterhin mit
einer Antriebszustandsbestimmungseinrichtung (**20, 21, S103, S104, S106, S204, S206**) zur Bestimmung eines Antriebszustands eines Fahrzeugs, an dem der Fahrzeugscheinwerfer (**30R, 30L**) angebracht ist,
wobei, wenn die Antriebszustandsbestimmungseinrichtung (**20, 21, S103, S104, S106, S204, S206**) bestimmt, dass das Fahrzeug bei einer festen Geschwindigkeit fährt, oder wenn die Straßenzustandsbestimmungseinrichtung (**12, 20, 21**) bestimmt, dass das Fahrzeug auf einer unebenen Straße fährt, die optische Achsensteuerungseinrichtung (**20, 210, 35R, 35L**) eine Ansprechgeschwindigkeit der Steuerung der Richtung der optischen Achse des Fahrzeugscheinwerfers (**30R, 30L**) derart verzögert, dass sie niedriger als eine Ansprechgeschwindigkeit zu einer Zeit ist, wenn die Antriebszustandsbestimmungseinrichtung (**20, 21, S103, S104, S106, S204, S206**) bestimmt, dass das Fahrzeug sich in einem gestoppten Zustand oder in einem beschleunigenden oder verlangsamenden Zustand befindet.

**4.** Gerät nach Anspruch 1, wobei
die optische Achsensteuerungseinrichtung **(20, 21, 35R, 35L**) eingerichtet ist, die Richtung der optischen Achse des Fahrzeugscheinwerfers (**30R, 30L**) auf eine vorbestimmte Position zu steuern, um dessen Steuerung zu stoppen, wenn die Straßenzustandsbestimmungseinrichtung (**12, 20, 21**) bestimmt, dass das Fahrzeug auf einer unebenen Straße fährt.

**5.** Gerät nach Anspruch 4, wobei
die optische Achsensteuerungseinrichtung (**20, 21, 35R, 35L**) eingerichtet ist, die Richtung der optischen Achse des Fahrzeugscheinwerfers (**30R, 30L**) auf eine Richtung der optischen Achse zurückzubringen, wenn das Fahrzeug gestoppt ist, um die Steuerung der Richtung der optischen Achse des Fahrzeugsscheinwerfers (**30R, 30L**) zu stoppen.

## Revendications

**1.** Dispositif de commande automatique de la direction d'un phare (30R, 30L) de véhicule, le dispositif comprenant :

un moyen de commande (20, 21, 35R, 35L) d'axe optique servant à commander la direction de l'axe optique du phare (30R, 30L) de véhicule; et
un moyen de détermination (12, 20, 21) d'état de route pour déterminer l'état d'une route sur laquelle circule le véhicule;
le moyen de commande (20, 21, 35R, 35L) d'axe optique servant en outre à retarder la réponse de commande de la direction de l'axe optique du phare (30R, 30L) de véhicule lorsque le moyen de détermination (12, 20, 21) d'état de route détermine que le véhicule circule sur une route à profil bosselé,
ledit dispositif comprenant en outre
un moyen de calcul (11F, 11R, 20, 21) d'inclinaison servant à calculer une inclinaison de l'axe optique du phare (30R, 30L) de véhicule par rapport à un plan de référence s'étendant en direction du phare (30R, 30L) de véhicule ; dans lequel
le moyen de commande (20, 21, 35R, 35L) d'axe optique sert en outre à commander la direction de l'axe optique du phare (30R, 30L) de véhicule sur la base de l'inclinaison calculée par le moyen de calcul (11F, 11R, 20, 21) d'inclinaison, et
le moyen de détermination (12, 20, 21) d'état de route sert à déterminer un état d'une route sur laquelle circule le véhicule sur la base d'un régime de vibrations détecté à partir d'une valeur de dispersion (θvar) calculée d'après la carrosserie et/ou la suspension du véhicule, et à déterminer le régime de vibrations sur la base d'un signal de sortie d'un détecteur de hauteur et/ou d'un signal de sortie d'un détecteur d'accélération verticale et/ou d'un angle de tangage (θp) de la carrosserie du véhicule dans une direction d'avant en arrière du véhicule par rapport audit plan de référence, carrosserie sur laquelle est monté le phare (30R, 30L) de véhicule.

**2.** Dispositif selon la revendication 1, dans lequel le moyen de commande (20, 21, 35R, 35L) d'axe optique sert à modifier un filtre (A, B, C) filtrant le signal de détection pour changer la réponse de commande de la direction de l'axe optique du phare (30R, 30L) de véhicule lorsque le moyen de détermination (12, 20, 21) d'état de route détermine que le véhicule circule sur une route à profil bosselé.

**3.** Dispositif selon la revendication 1, comprenant en outre :

un moyen de détermination (20, 21, S103, S104, S106, S204, S206) d'état de conduite pour déterminer un état de conduite d'un véhicule sur lequel est monté le phare (30R, 30L) de véhicule;
dans lequel, lorsque le moyen de détermination (20, 21, S103, S104, S106, S204, S206) d'état de conduite détermine que le véhicule circule à une vitesse fixe ou lorsque le moyen de détermination (12, 20, 21) d'état de la route détermine que le véhicule circule sur une route à profil bosselé, le moyen de commande (20, 210, 35R, 35L) d'axe optique retarde une vitesse de réponse de commande de la direction de l'axe optique du phare (30R, 30L) de véhicule de façon qu'elle soit inférieure à une vitesse de réponse à un moment où le moyen de détermination (20, 21, S103, S104, S106, S204, S206) d'état de conduite détermine que le véhicule est à l'arrêt ou en phase d'accélération ou de ralentissement.

**4.** Dispositif selon la revendication 1, dans lequel
le moyen de commande (20, 21, 35R, 35L) d'axe optique sert à commander la direction de l'axe optique du phare (30R, 30L) de véhicule dans une position prédéterminée pour cesser de commander celle-ci lorsque le moyen de détermination (12, 20, 21) d'état de la route détermine que le véhicule circule sur une route à profil bosselé.

**5.** Dispositif selon la revendication 4, dans lequel
le moyen de commande (12, 20, 35R, 35L) d'axe optique sert à rétablir la direction de l'axe optique du phare (30R, 30L) de véhicule dans la direction de l'axe optique lorsque le véhicule est à l'arrêt pour cesser de commander la direction de l'axe optique du phare (30R, 30L) du véhicule.

FIG. 1

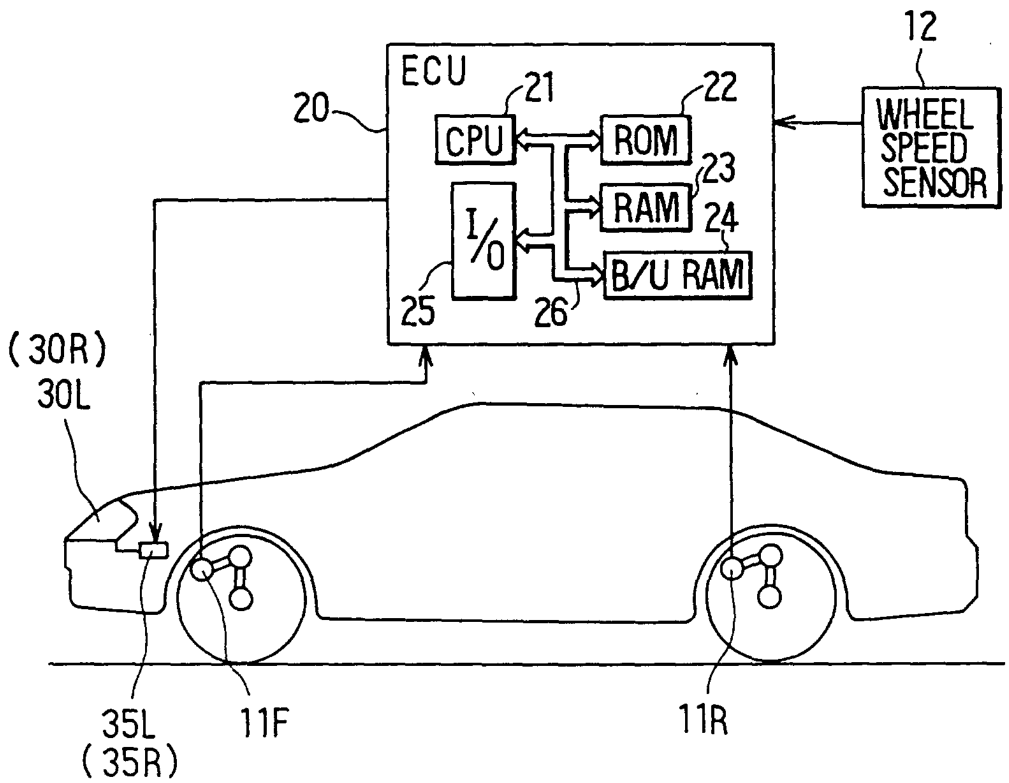
ECU
20
CPU
21
ROM
22
RAM
23
24
B/U RAM
I/O
25
26
12
WHEEL SPEED SENSOR
(30R)
30L
35L
(35R)
11F
11R

FIG. 2

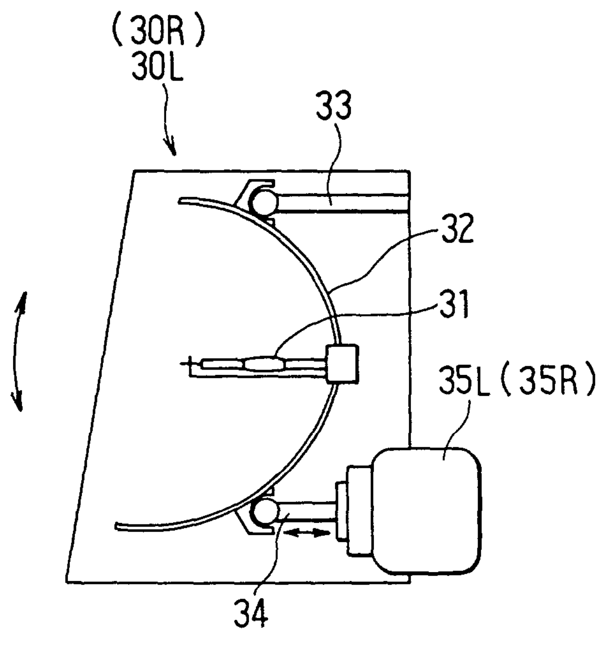
(30R)
30L
33
32
31
35L (35R)
34

FIG. 3

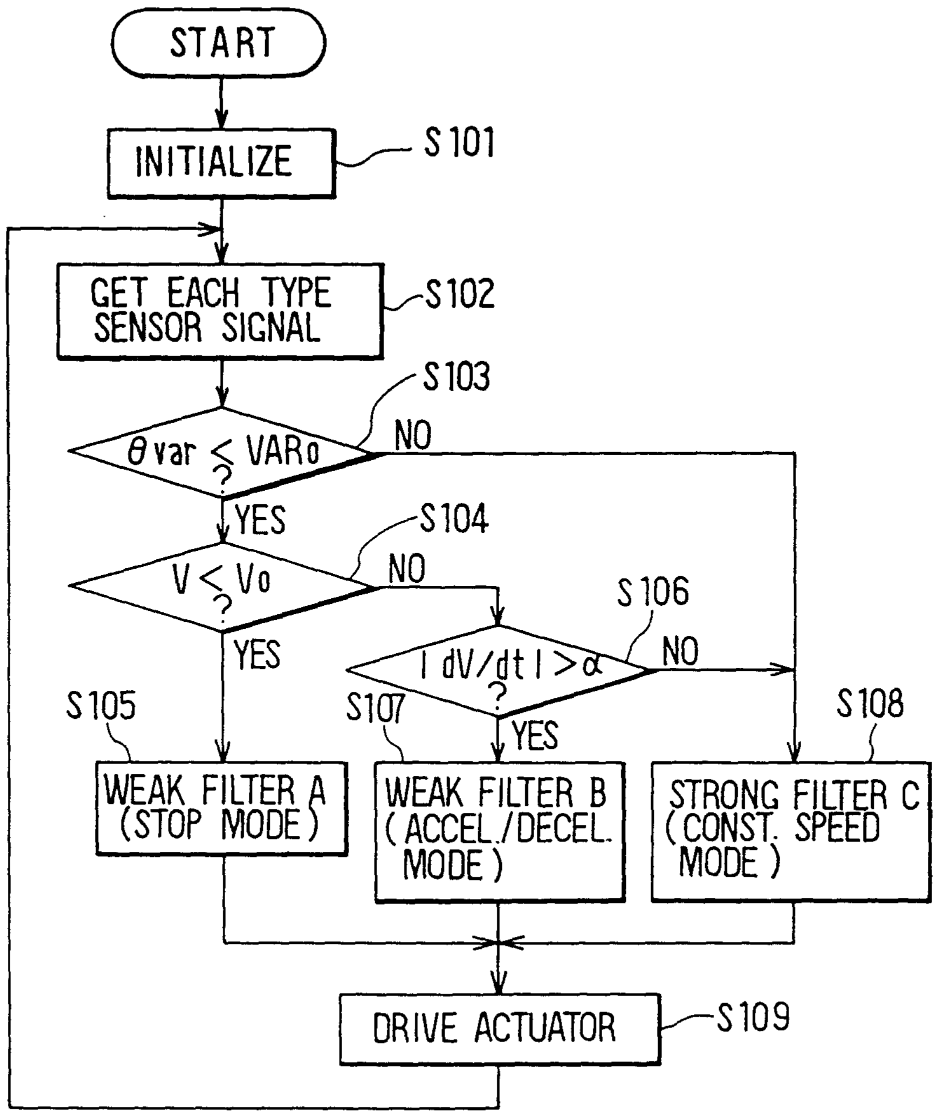
START
INITIALIZE
S101
GET EACH TYPE SENSOR SIGNAL
S102
S103
θvar ≤ VAR0 ?
NO
YES
S104
V ≤ V0 ?
NO
S106
YES
| dV/dt | > α ?
NO
S105
S107
YES
S108
WEAK FILTER A (STOP MODE)
WEAK FILTER B (ACCEL./DECEL. MODE)
STRONG FILTER C (CONST. SPEED MODE)
DRIVE ACTUATOR
S109

FIG. 4

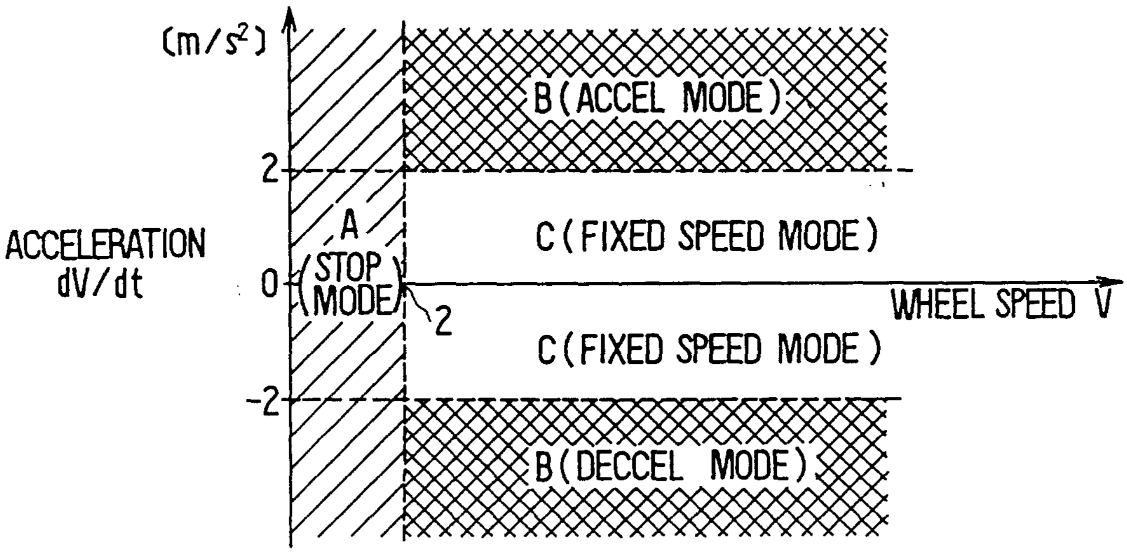
(m/s²)
B (ACCEL MODE)
2
A
(STOP MODE)
ACCELERATION
dV/dt
0
C (FIXED SPEED MODE)
WHEEL SPEED V
2
C (FIXED SPEED MODE)
-2
B (DECCEL MODE)

FIG. 5

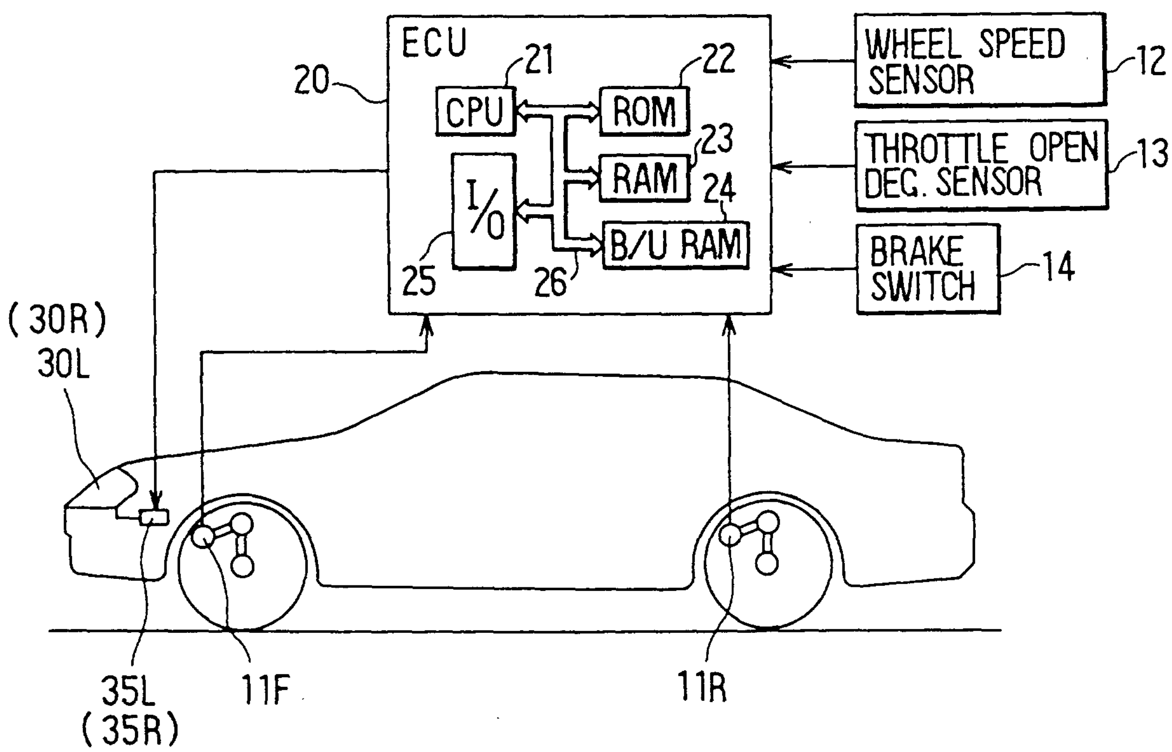
ECU
20
21
CPU
22
ROM
23
RAM
24
B/U RAM
I/O
25
26
WHEEL SPEED SENSOR
12
THROTTLE OPEN DEG. SENSOR
13
BRAKE SWITCH
14
(30R)
30L
35L
(35R)
11F
11R

FIG. 6

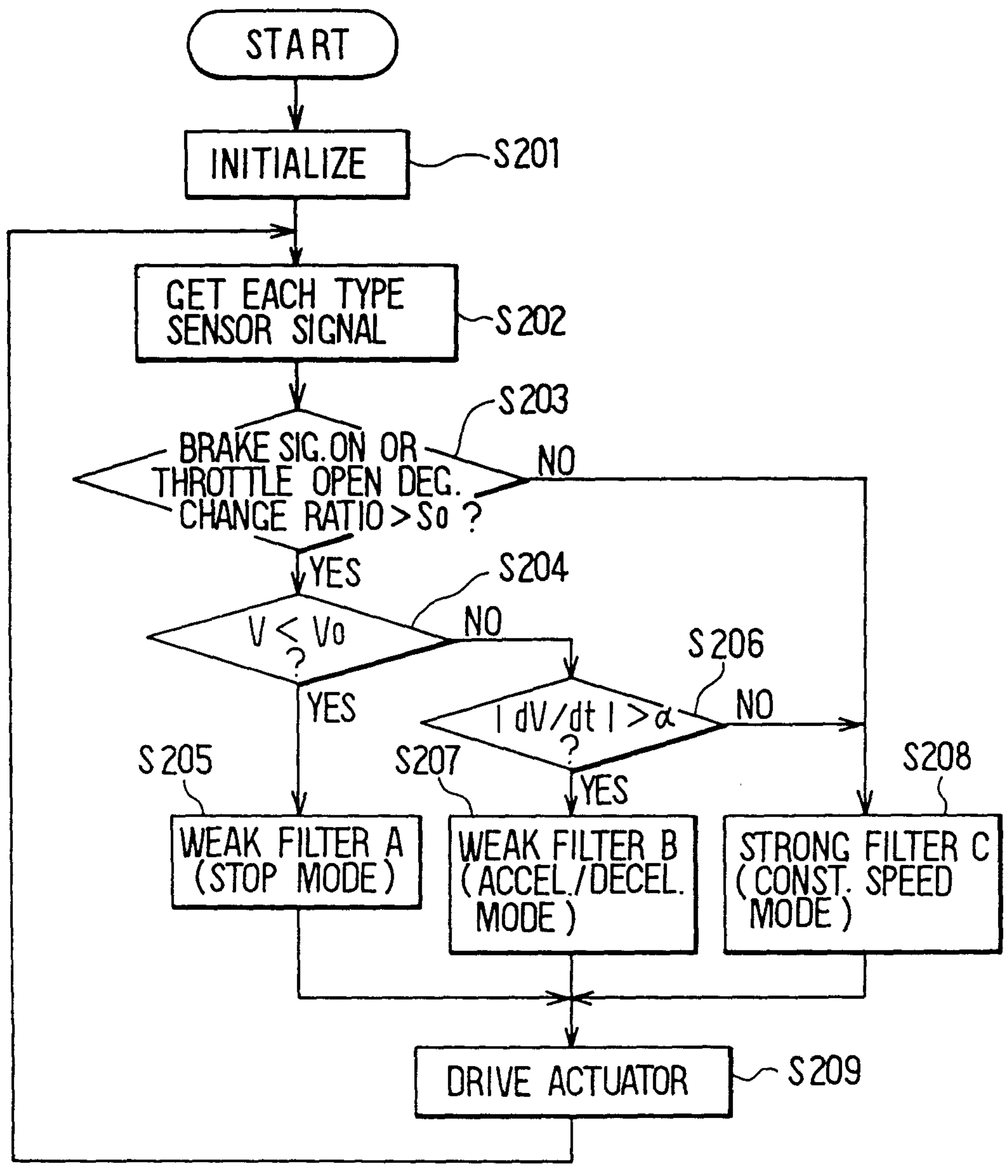
START
INITIALIZE
S201
GET EACH TYPE SENSOR SIGNAL
S202
BRAKE SIG. ON OR THROTTLE OPEN DEG. CHANGE RATIO > So ?
S203
NO
YES
V < Vo ?
S204
NO
YES
| dV/dt | > α ?
S206
NO
YES
S205
S207
S208
WEAK FILTER A (STOP MODE)
WEAK FILTER B (ACCEL./DECEL. MODE)
STRONG FILTER C (CONST. SPEED MODE)
DRIVE ACTUATOR
S209

FIG. 7A

FIG. 7B

FIG. 7C

FIG. 7D

FIG. 7E

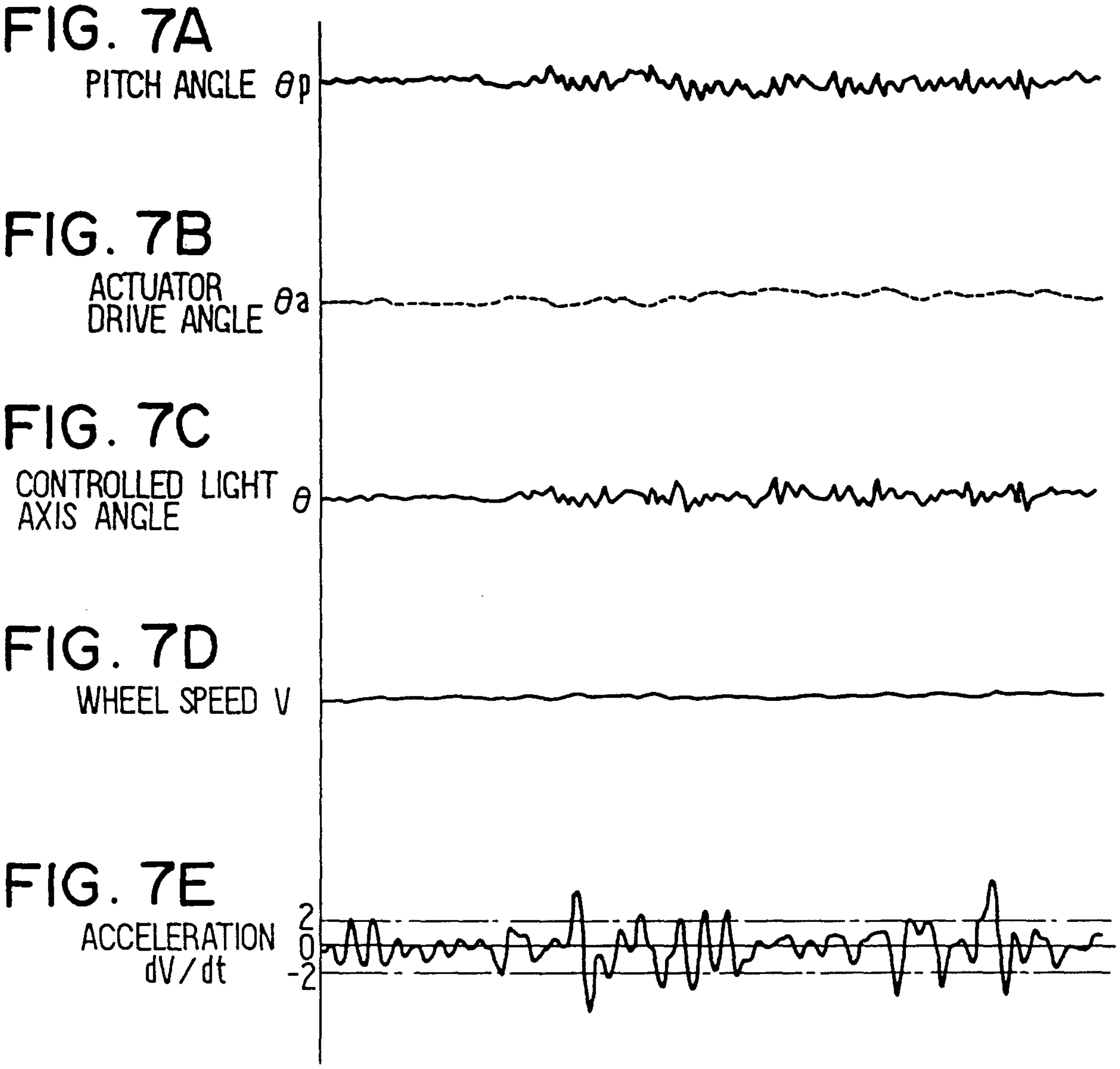


PRIOR ART